# EUROPÄISCHE PATENTANMELDUNG

(11) **EP 2 530 461 A2**
(43) Veröffentlichungstag der Anmeldung: **05.12.2012**
(21) Anmeldenummer: 12004158.7
(22) Anmeldetag: 30.05.2012
(51) Int. Cl.: G01N 27/38

(54) **Verfahren und Vorichtung zu einer von ausserhalb möglichen Wartung, Reinigung und Kalibrierung von elektroanalytischen Messeinrichtungen in Gülle**

(30) Priorität: 30.05.2011 AT 3142011 U
(71) Anmelder: Gilhofer, Andree, 4170 Haslach (AT)
(72) Erfinder: Gilhofer, Andree, 4170 Haslach (AT)
(74) Vertreter: Landgraf, Elvira

(57) **Zusammenfassung**

Die Erfindung betrifft ein Verfahren und eine Vorrichtung zur Wartung, Reinigung, Kalibrierung und Verlängerung der Lebensdauer von Sonden bei einer kontinuierlichen, elektroanalytischen Messanlage für chemische und physikalische Parameter zur laufenden Ermittlung der Qualität sowie der Anfallsmenge von Gülle aus der Tierhaltung ohne dass eine Demontage der Messelektroden erforderlich ist, indem der Kontakt der Messelektrode (7) zur umgebenden Flüssigkeit kurz- oder mittelfristig unterbrochen und eine Spülung (2) mit wässrigen Flüssigkeiten zur Reinigung und Aufbewahrung in Messpausen sowie eine Kalibrierung mit Eichlösungen zur Kontrolle und Eichung von außerhalb möglich wird.

## Beschreibung

Die Erfindung betrifft ein Verfahren und eine Vorrichtung zur Wartung, Reinigung, Kalibrierung und Verlängerung der Lebensdauer von Sonden bei einer kontinuierlichen, elektroanalytischen Messanlage für chemische und physikalische Parameter zur laufenden Ermittlung der Qualität sowie der Anfallsmenge von Gülle aus der Tierhaltung ohne dass eine Demontage der Messelektroden erforderlich ist, indem der Kontakt der Messelektrode zur umgebenden Flüssigkeit kurz- oder mittelfristig unterbrochen und eine Spülung mit wässrigen Flüssigkeiten zur Reinigung und Aufbewahrung in Messpausen sowie eine Kalibrierung mit Eichlösungen zur Kontrolle und Eichung von außerhalb möglich wird und die Funktionalität und die Lebensdauer von Sonden verlängert werden kann.

Aus EP 2 179 978 A ist ein Verfahren zur regulierten Fermentation von Güllen bekannt. Dabei werden Zustandswerte der Gülle durch geeignete Messvorrichtungen erfasst und anhand dieser Messwerte die Fermentationsbedingungen eingestellt.

Aufgabe der Erfindung ist es, ein Verfahren und eine Vorrichtung bereitzustellen und einzusetzen, mit der eine kontinuierliche Messung wichtiger Qualitätsgrößen mit Hilfe von Messelektroden im Gemisch von Harn und Kot und Form von Gülle mit einer jederzeit möglichen Wartung, Kontrolle, Kalibrierung und Eichung sowie Aufbewahrung der Messvorrichtung während bestimmter Messpausen einfach von außerhalb in der gegebenen Position der Messeinrichtung in Stalllungen oder im Freien möglich ist, ohne dass die Lage der gesamten, in der Gülle eingetauchten Messeinrichtung verändert werden muss oder die Messelektroden ausgebaut werden müssen.

Ziel der Erfindung ist es im Gemisch von Kot und Harn in Form von Gülle aus der Tierhaltung qualitätsgesicherte und geeichte Daten zu wichtigen Eigenschaften von Gülle wie beispielsweise Temperatur, pH-Wert, Leitfähigkeit und Redoxpotential zu gewinnen. Folgende Messelektroden oder elektroanalytische Sensoren werden dazu eingesetzt: Wärmesensoren zur Ermittlung der aktuellen Temperatur und zum Verlauf, pH-Elektroden zur Bestimmung der aktuellen und in einem bestimmten Zeitraum verlaufenden Wasserstoffionenkonzentration, chemisch bezeichnet als pH-Wert; Leitfähigkeitssonden, um die Eigenschaft der Gülle zu messen, elektrischen Strom zu leiten bzw. deren Konduktivität zu bestimmen; Redoxelektroden um das Reduktions/-Oxidationspotential als physikalische Größe unter Standardbedingungen gegen eine Standard-Referenz-Halbzelle aktuell oder während längerer Dauer zu ermitteln.

Erfindungsgemäß wird diese Aufgabe gelöst, indem die die Sensoren tragende Messlanze durch ein Rohr von der umgebenden flüssigen Phase kurz- oder mittelfristig in bestimmten Messpausen abgetrennt bleibt und das umgebende Rohr am unteren Ende durch eine bestimmte Bauart im Messmodus geöffnet oder flüssigdicht verschlossen werden kann, damit die Sonde von außerhalb mit Wasser oder wässrigen Lösungen gereinigt und mit Eichlösungen umspült sowie in Messpausen schonend aufbewahrt werden kann.

Die Erfindung betrifft ein Verfahren zur Vereinfachung und hygienischen Gestaltung einer aktuellen oder über einen längeren Zeitraum laufenden Ermittlung von chemischen und physikalischen Eigenschaften von Gülle sowie von deren täglicher Anfallsmenge. Dazu wird der Kontakt der eingesetzten Messelektroden oder Sonden von der umgebenden Gülle kurz- oder mittelfristig so unterbrochen, dass die notwendigen Reinigungs- und Kalibrier- sowie Aufbewahrungsflüssigkeiten an die Messelektroden oder Sonden herangebracht werden können, ohne dass eine Demontage der gesamten Messeinrichtung notwendig wird oder diese ausgebaut werden müssen. Dazu werden beispielsweise 4 Ausführungsvarianten eingesetzt mit denen das genannte Ziel erreicht werden kann. Die so konstruierten Messeinrichtungen können in Güllekellern unter Spaltenböden, in Güllekanälen, in Vorgruben oder in außerhalb der Ställe befindlichen Güllelagern oder Güllelagunen eingesetzt werden. Die Messeinrichtungen werden entweder an einer geeigneten Stelle dauerhaft montiert oder können auch schwimmend in Güllelagern eingesetzt werden. An den fix montierten Messlanzen kann zusätzlich eine mechanische oder elektronische Füllstandsmessung angebracht werden, mit der die tägliche Anfallsmenge exakt verfolgt werden kann. Die elektronische Auslesung und Speicherung der Daten erfolgt über entsprechend verkabelte oder kabellos angebundene Geräte zur Datenaufnahme und Datenweitergabe.

Gülle ist ein Intermediärprodukt im landwirtschaftlichen Rückstrom der Nährstoffe. Einerseits ein wichtiger Dünger andererseits aber auch durch das eutrophe Potential und toxische sowie infektiöse Begleitstoffe eine Gefahr für die Gesundheit von Mensch und Tier, die Umwelt, den Boden und den Pflanzenbestand. Gülle hat gegenüber vielen Werksstoffen korrosive Eigenschaften und wirkt daher chemisch auch auf Messsonden ein und verkürzt so deren Lebensdauer. Im Interesse einer guten landwirtschaftlichen Praxis sollten dem Landwirt zumindest die wichtigsten, den Düngewert bestimmenden Inhaltsstoffe oder Eigenschaften sowie die tägliche Anfallsmenge bekannt sein, sodass aus der Sicht der Nährstoffmengen und Nährstoffverluste eine best- mögliche Rückführung und eine Emissionsminderung erleichtert werden kann. Darüber hinaus sollten aber auch jene Kriterien für Maßnahmen analytisch fassbar werden, mit welchen die Qualität von Gülle mit einem geringst möglichen Aufwand und zu vertretbaren Kosten verbessert werden kann. Auf elektroanalytischem Weg können dazu wichtige Daten wie Temperatur, pH-Wert, Leitfähigkeit und das Redoxpotential auf einfache Weise gemessen und laufend verfolgt werden. Wird beispielsweise der pH-Wert von Güllen dauerhaft unter einer Marke von 7,0 gehalten, können Nährstoffverluste in Form von Ammoniak und Geruchsemissionen vermieden werden. Die Messung von chemischen und physikalischen Parametern kann daher wesentlich beitragen, die Qualität von Güllen zu verbessern, wenn mit Hilfe von eintauchenden Messelektroden Daten über einen längeren Zeitraum aufgezeichnet werden können. Es zeigte sich, dass auch ein Einfluss der Fütterung über die Rationsgestaltung und das Energie-Eiweißverhältnis in den elektroanalytischen Parametern von Gülle festgestellt werden kann.

Ein großer Nachteil dieses Messverfahrens besteht jedoch in der Verschmutzung und in einer Verringerung der Lebensdauer der Messelektroden bei länger andauernder Verwendung. Für Wartung, die notwendige Reinigung, Kalibrierung und Eichung sowie eine vorübergehende Aufbewahrung der Messelektroden in neutralen Flüssigkeiten während bestimmter Messpausen, wie dies zu einer dauerhaften, qualitätsgesicherten und kostensparenden Datenaufnahme notwendig ist, ergibt sich ein erschwerter, zeitaufwändiger und unhygienischer Arbeitseinsatz sowie ein höherer Kostenaufwand durch den Verschleiß von Messsonden, der durch die Erfindung vermieden werden kann.

Aufgabe der Erfindung ist es deshalb, ein Verfahren zu gestalten, welches einfach und zeitsparend eine Wartung, Reinigung, Überprüfung, Kalibrierung und Eichung sowie Aufbewahrung von elektroanalytischen Messsonden ermöglicht und mit der zusätzlich über den Füllstand der Güllegrube die tägliche Anfallsmenge bestimmt werden kann sowie ein permanentes Eintauchen der Sonden in die Gülle überprüft werden kann.

Die effiziente und zeitsparend durchführbare elektrochemische Analyse der Gülle kann so ohne zeitaufwändigen und die Gesundheit gefährdenden Wartungsaufwand verwirklicht und eine kontinuierliche Beurteilung des Zustandes bei der Lagerung und der Vergärung von Gülle im Hinblick auf einen gelenkten biologischen Prozess zur Verhinderung von Nährstoff- und Geruchsemissionen ermöglicht werden, sowie auf Grund der täglichen Anfallsmenge auf die Futteraufnahme der Tiere geschlossen werden.

Die Aufgabe wird dadurch gelöst, dass mit Hilfe eines an der Unterseite verschließbaren Rohres, welches die Messlanze umfasst, eine räumliche Trennung der Messelektroden von der umgebenden Gülle erreicht wird, so dass man bei Wartungsarbeiten einer Reinigung und Umspülung mit Eichlösung und Aufbewahrung in Messpausen ohne zeitraubende und unhygienische Demontage der ganzen Messeinrichtung auskommt und dass an den fix montierten eintauchenden Messlanzen mechanische oder elektronische Füllstandsmesser angebracht sind.

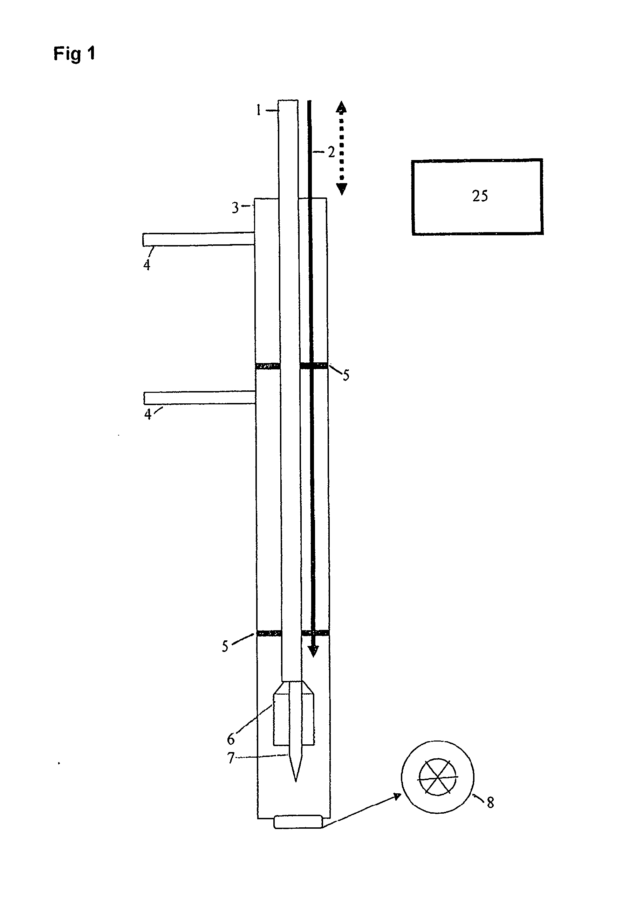

Das Verfahren besteht darin, technische Ausführungsvarianten wie in den Fig. 1- 5 dargestellt heranzuziehen, um elektroanalytische Daten in Gülle und deren tägliche Anfallsmenge in effizienter und qualitätsgesicherter Weise zu messen und die notwendigen Wartungsarbeiten und Kalibrierungen auf einfache Weise zu gestalten.

Als Effekte der Erfindung gelten die Vermeidung von hohem und unhygienischem Wartungs- und Kalibrieraufwand und die Verminderung von Kosten bei der elektroanalytischen Messung von Eigenschaften wie pH-Wert und Temperatur und deren zeitlichen Verlauf, der Leitfähigkeit sowie Reduktions- /- Oxidationspotential und deren zeitlichen Verlauf und bei der kontinuierlichen Dokumentation der Messdaten sowie bei der Bestimmung und Aufzeichnung der täglich anfallenden Güllemenge.

Die Ausführungsvarianten sind in den Varianten A, B, C, D, E, F und G in den Zeichnungen 1 bis 7 dargestellt.

Die Variante A mit einer Schlitzscheibe aus Gummi an der Unterseite des Außenrohres kann als einfache Ausführung sowohl in Edelstahl als auch in Kunststoff ausgeführt werden. Dieses Bauprinzip ist in Verbindung mit einem Schwimmkörper auch in der Variante D einsetzbar.

Die Variante B verwendet eine Schwertverschluss um an der Unterseite des Außenrohres einen dichten Abschluss zu erreichen.

Die Variante C verfügt über einen ausklappbaren Verschluss, der auch ein Herausfahren der Messlanze ermöglicht, um auf einfache Weise eine tiefere Messposition zu erreichen.

Die Variante D ist mit einem Schwimmkörper ausgeführt und verwendet die Bauart wie in Zeichnung 1 dargestellt, da diese Form auch in Kunststoff gefertigt werden kann. Eine Elektronikbox zur Datenaufnahme und Datenweitergabe kann sowohl im Funkmodus als auch über Verkabelung betrieben werden.

Die Variante E wird so ausgeführt, dass bei den fix montierten Messlanzen Varianten beispielsweise A, B, und C zusätzlich eine mechanische oder elektronische Einrichtung angebracht wird, mit welcher der Füllstand der Güllegrube kontinuierlich festgestellt und dokumentiert sowie das Eintauchen der Sonde überprüft werden kann.

Die Variante F ist so ausgeführt, dass mit Hilfe eines Spindelhubmotors die Messlanze und eine Verschlussplatte, die an zwei seitlichen Gleitstangen befestigt ist, zur Messung ausgefahren und für Messpausen an das unteren Ende des Rohres herangezogen werden kann und mit einer Dichtung ein Abschluss der Sonde von der umgebenden Gülle erreicht wird.

Bei der Variante G sind die mechanischen Elemente wie bei Variante F in einem Rohr positioniert, wobei jedoch die Messlanze fix montiert ist und sich eine Verschlusshaube von oben nach unten und zurück bewegt. Die Zufuhr der Spül- und Eichlösung erfolgt mit einer Leitung, die in den Hohlraum der Verschlusshaube hineinragt.

Figur 1 zeigt die Vorrichtung zur Wartung, Reinigung und Kalibrierung von Messelektroden zur Verwendung in Gülle. In Figur 1 bedeuten 1 die Messlanze, die durch ein Edelstahlrohr mit Lochung realisiert ist, 2 die Zufuhrleitung von Spülwasser bzw. Eichlösung, 3 das äußere Rohr aus Edelstahl, 4 Halterungen, 5 einen Führungsring mit Runddichtung aus Gummi oder Kunststoff, 6 den Aufnahmeteil der Messelektrode der abschraubbar ist, 7 die Messelektrode und 8 die Schlitzgummischeibe, 25 den mit der Sonde mit einem Kabel verbundenen Elektronikbauteil für die Datensammlung und Weiterleitung.

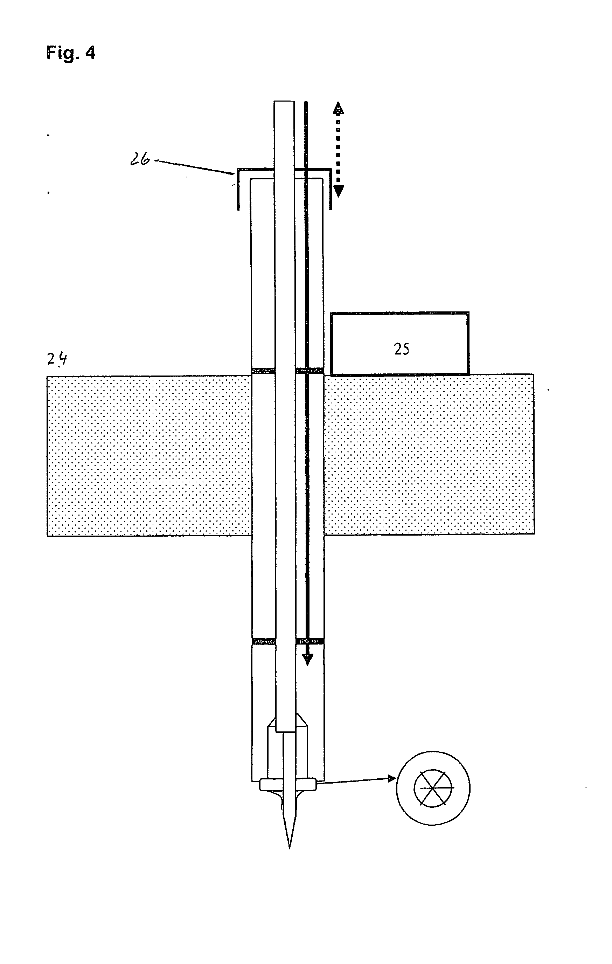

Die Messeinrichtung besteht aus einem inneren Edelstahlrohr, bezeichnet als Messlanze (1), mit einer erweiterten und abschraubbaren Aufnahme (6) für unterschiedliche Messsonden (7). Das äußere Edelstahlrohrohr (3)dient der Halterung und Montage in der Weise, dass das untere Ende in die zu messende Gülle eintaucht. Zumindest zwei Führungsringe (5) mit Dichtungen ermöglichen eine zentrierte Position und ein Auf- und Abschieben der inneren Messlanze (1). Die Zeichnung zeigt die nach oben gezogene Position, bei der die Messelektroden (7) gewartet werden können. Durch ein dünnes Rohr (2) neben der Lanze kann Wasser oder Reinigungslösung und Kalibrierlösung eingebracht werden. Die von außen zugeführte Flüssigkeit wird in dieser Ausführung durch die Schlitzgummischeibe (8) nach unten weggedrückt. Nach Ende des Vorgangs wird die Sonde aus der durch das umfassende äußere Rohr (3)gebildeten räumlich von der Gülle abgetrennten Position durch die Schlitzscheibe (8) nach unten gedrückt, sodass der Messteil (7) der Sonde wiederum in die Gülle ragt und der nur kurzfristig unterbrochene Messvorgang weitergeführt werden kann. Die dargestellte Konfiguration eignet sich in einer leichten Ausführung aus Kunststoff auch für den schwimmenden Einsatz der Messeinrichtung auf einem Schwimmkörper, wie auf die Figur 4 verwiesen wird.

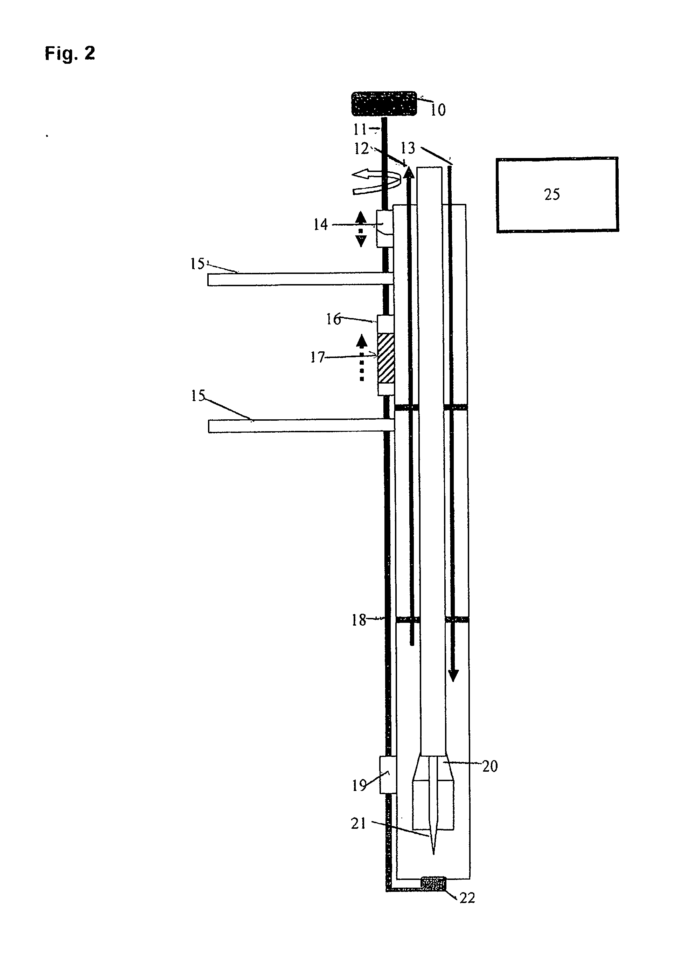

Figur 2 zeigt die Vorrichtung baugleich wie in Figur 1 mit dem Unterschied, dass am unteren Ende des äußeren Rohres eine dichtende Verschlussscheibe so konstruiert ist, dass sie über den Mechanismus eines Schwertverschlusses bei einer Drehung nach außen auch gleichzeitig nach unten abgehoben wird.

Für diese Funktion ist ein seitliches Gestänge vorgesehen, welches nach dem oberen Ende des äußeren Rohres führt. Das Gestänge ist durch zwei Aufnahmen positioniert und wird durch eine Feder nach oben gedrückt. Am oberen Ende befindet sich jenes zylindrische aus zwei Teilen, bestehende Funktionselement, welches bei einer Drehung am Drehknopf das Gestänge nach unten presst. Wenn die Messeinrichtung offen ist rastet das Gestänge in einer Zwischenposition ein. Die Messlanze kann dann bei geöffnetem Zustand nach unten geführt werden, so dass sie in die Gülle hineinragt. Im geschlossen Zustand wird die Spül- und Eichlösung durch ein zweites dünneres Rohr nach außen geführt.

In Fig. 2 bedeutet 10 einen Drehknopf, 11 ein Verbindungsgestänge, 12 den Auslauf für die Spül- bzw. Eichlösung, 13 den Zulauf für die Spül- bzw. Eichlösung, 14 eine vorzugsweise zylindrische Aufnahme zur Absenkung des Verbindungsgestänges, 15 Halterungen, 16 das Gegenstück auf dem Verbindungsgestänge, 17 eine nach oben drückende Feder, 18 einen Führungsring mit Dichtung, 19 die Aufnahme des Verbindungsgestänges, 20 die aufschraubbare Aufnahme für die Messsonde und 21 die Messsonde, 22 die ausdrehbare Verschlussscheibe mit Gummidichtung, 25 den mit der Sonde mit einem Kabel verbundenen Elektronikbauteil für die Datensammlung und Weiterleitung.

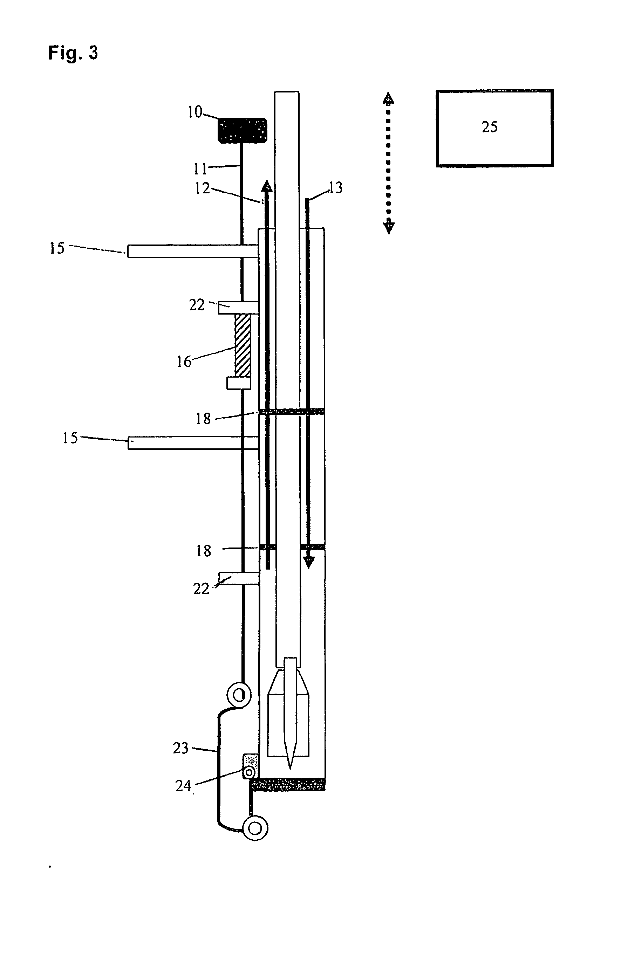

Figur 3 zeigt die Vorrichtung baugleich wie in Figur 2 mit dem Unterschied, dass am unteren Ende des äußeren Rohres eine dichtende Verschlussscheibe so konstruiert ist, dass sie über den Mechanismus eines 3-fach gelagerten Gestänges bei einem Zug nach oben die Verschlussklappe nach unten abgehoben wird. Für diese Funktion ist ein seitliches Gestänge vorgesehen, welches bis zum oberen Ende des äußeren Rohres führt. Das Gestänge ist durch zwei Aufnahmen positioniert und wird durch eine Feder nach unten gedrückt, so dass die Klappe an das äußere Rohr angedrückt wird. In der Verschlussklappe ist ein äußerer Dichtungsring integriert. Nach dem Öffnen der Klappe rastet das Gestänge in der obersten Position ein. In diesem Zustand kann dann die Messlanze ausgefahren werden. Diese Konstruktion ist besonders für tiefe Güllegruben geeignet, da die Messlanze nach unten ausgefahren werden kann.

In Fig. 3 bedeutet 10 einen Drehknopf, 11 ein Verbindungsgestänge, 12 den Auslauf für die Spül- bzw. Eichlösung,13 den Zulauf für die Spül- und Eichlösung, 14 und 15 Halterungen für die Montage, 16 nach unten drückende Feder, 18 Führungsringe mit Dichtung, 22 die Aufnahmen des verbindungsgestänges, 23 Gelenksverbindung, 23 aufklappbarer Verschluss mit Dichtungseinlage, 25 den mit der Sonde mit einem Kabel verbundenen Elektronikbauteil für die Datensammlung und Weiterleitung.

Figur 4 zeigt die Vorrichtung baugleich wie in Figur 1 mit dem Unterschied, dass das Messelement in einem Schwimmkörper 27 integriert ist. Die elektronische Datensammlung und Weiterleitung kann über eine verkabelte Elektronikbox erfolgen oder aber batteriebetrieben über eine Funkstation ausgelesen werden. Diese Ausführung eignet sich besonders für große, im Freien liegende Güllebehälter. In Fig. 4 bedeutet die Ziffer 26 eine obere Verschlusskappe, 24 ein Schwimmelement, 25 den mit den Sonden mit einem Kabel verbundenen Elektronikbauteil für die Datensammlung und Weiterleitung

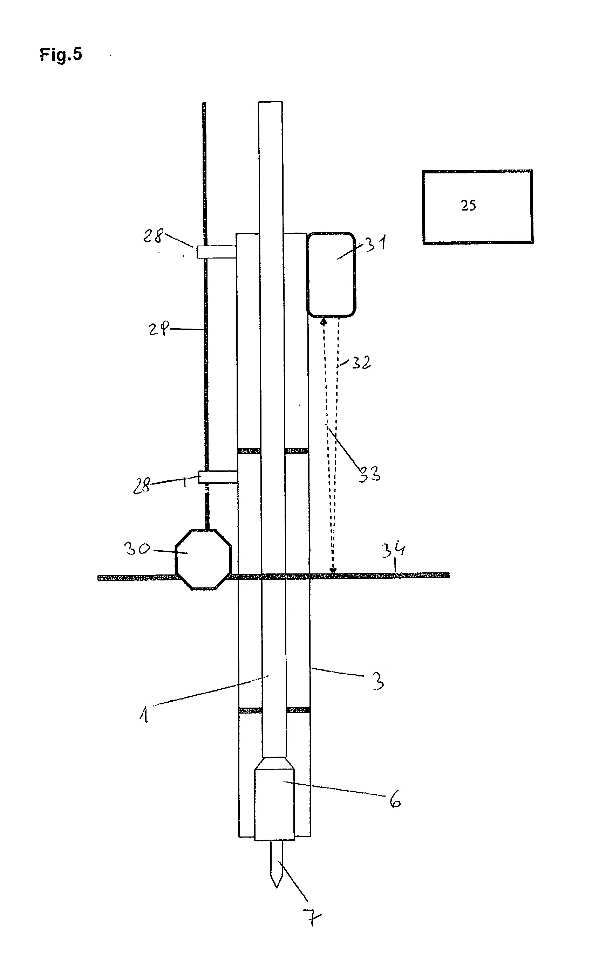

Figur 5 zeigt die Adaptierung einer Messlanze in den Ausführungen wie als Varianten A, B und C in den Anlageblättern 1, 2 und 3 dargestellt, zusätzlich mit einem seitlich angebrachten Füllstandsmesser. Dieser kann mechanisch als Schwimmer konstruiert sein oder als ein elektronischer Bauteil, welcher Licht- oder Schallsignale aussendet, die von der Oberfläche der Gülle reflektiert werden und so die Füllstandshöhe kontinuierlich errechnet werden kann.

In Fig. 5 bedeutet 28 die Aufnahme für das Gestänge des Schwimmers, 29 das Gestänge, 30 den Schwimmer, 31 den Füllstandssensor, 32 ausgesandte Lichtstrahlen oder Schallwellen, 33 reflektierte Licht- oder Schallwellen, 34 die Oberfläche der Gülle und 25 den mit den Sonden mit einem Kabel verbundenen Elektronikbauteil für die Datensammlung und Weiterleitung.

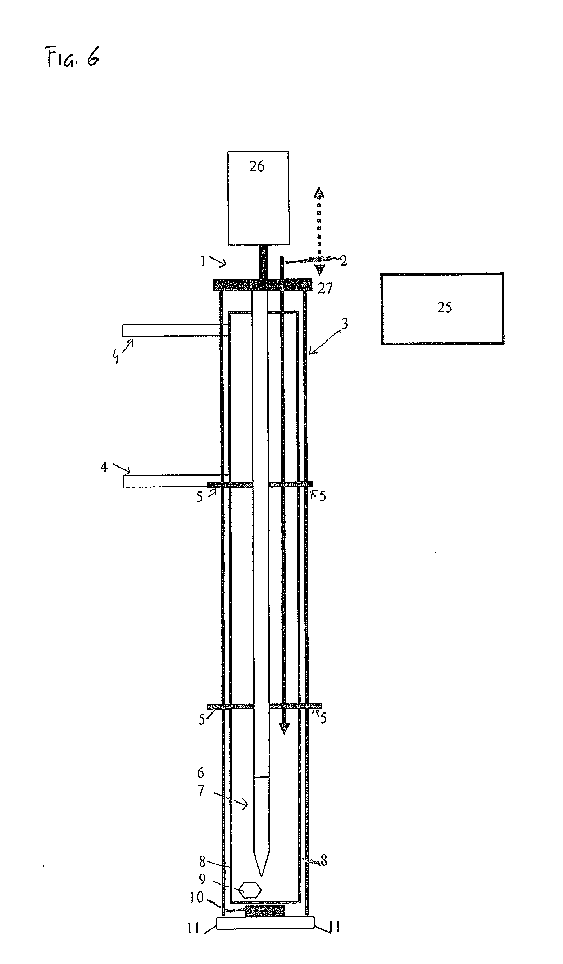

Figur 6 bzw. Variante F zeigt die Vorrichtung zur Wartung, Reinigung und Kalibrierung und Aufbewahrung von Messelektroden zur Verwendung in Gülle mit einem verschiebbaren, auf zwei Gleitstangen geführten Verschlussteil mit Dichtung, der sich gleichzeitig mit der Sonde nach unten und oben bewegt in geschlossener Position.

In Figur 6 bedeuten 1 die Messlanze, die durch ein Edelstahlrohr mit Lochung realisiert ist, 2 die Zufuhrleitung von Spülwasser bzw. Eichlösung, 3 das äußere Rohr aus Edelstahl oder Kunststoff, 4 zwei Halterungen, 5 Führungsteile mit integrierter Runddichtung aus Gummi oder Kunststoff die auch der Verschraubung von Rohrstücken dienen, 6 den Aufnahmeteil der Messelektrode der abschraubbar ist, 7 die Messelektrode und 8 die beiden seitlichen Gleitstangen, 9 ein Überdruckventil, 10 die in dem Teil 11, der Verschlussplatte, integrierte Gummidichtung, 25 zeigt den mit der Sonde mit einem Kabel verbundenen Elektronikbauteil für die Datensammlung und Weiterleitung, 26 den Spindelhubmotor und 27 eine Verbindungsplatte mit Verbindungsstück zum Spindelhubmotor, der Gleitstange und der Messlanze mit der Messsonde am unteren Ende.

Das äußere Edelstahl- oder Kunststoffrohr dient der Halterung der Messlanze und der Montage in der Weise, dass das untere Ende in die zu messende Gülle eintaucht. Zumindest zwei Führungsteile mit Dichtungen ermöglichen eine zentrierte Position und ein Auf- und Abschieben der inneren Messlanze.

Die Figur 6 zeigt die nach oben gezogene Sonde in Ruheposition, bei der die Messelektroden gewartet werden können. Durch ein dünnes Rohr neben der Lanze kann Wasser oder Reinigungslösung und Kalibrierlösung eingebracht werden. Die Flüssigkeit wird zugeführt, solange der Verschlussteil am unteren Rohrende noch 1 - 3 mm offen ist. Gleichzeitig mit dem Verschließen durch Andrücken des Dichtgummis wird auch die Flüssigkeitszufuhr gestoppt, ein Überdruckventil dient dem Druckausgleich. Das Öffnen und Schließen der Aufbewahrungs- und Spülkammer wird erreicht, indem der Verschlussteil auf zwei seitlich geführten Gleitstangen mit Hilfe eines Spindelhubmotors nach unten und oben bewegt wird.

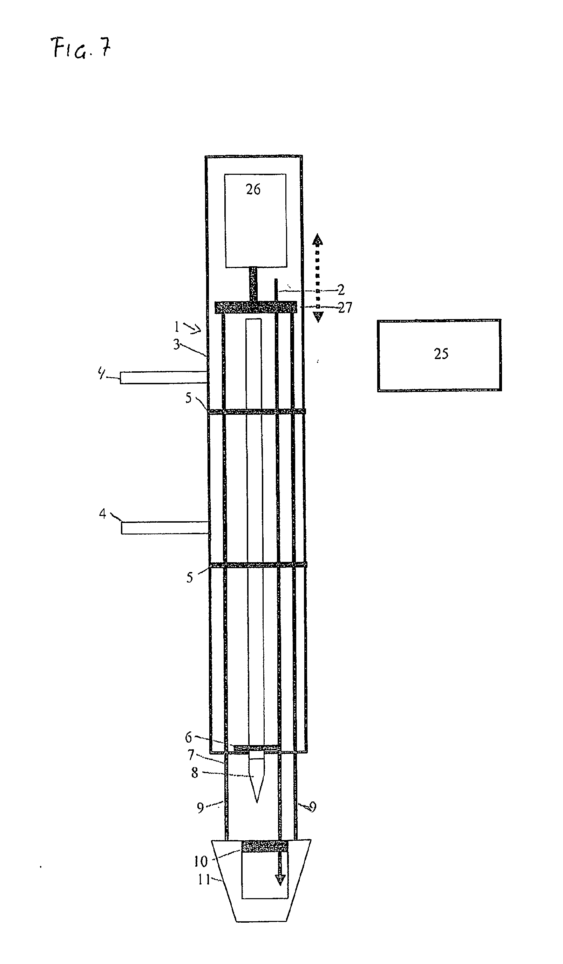

Figur 7 bzw. Variante G zeigt eine Ausführung zur Wartung, Reinigung und Kalibrierung und Aufbewahrung von Messelektroden zur Verwendung in Gülle mit einer verschiebbaren, auf zwei Gleitstangen geführten Verschlusshaube mit einer nach oben offenen Kammer und integrierter Dichtung, die über die Sonde in fixierter Position geführt wird und sich je nach Messphase und Messpause nach unten und oben bewegen kann.

In Figur 7 bedeuten 1 die Messlanze, die durch ein Edelstahlrohr realisiert ist, 2 die bis in den Hohlraum der Verschlusshaube reichende Zufuhrleitung von Spülwasser bzw. Eichlösung, 3 das äußere Rohr aus Edelstahl oder Kunststoff, 4 zwei Halterungen, 5 zwei Führungsteile mit Runddichtung aus Gummi oder Kunststoff, 6 einen Dichtungsring, 7 den Aufnahmeteil der Messelektrode der abschraubbar ist, 8 die Messelektrode und 9 die beiden Gleitstangen, 10 die in dem Teil 11, der Verschlusshaube, integrierte Gummidichtung, 25 zeigt den mit der Sonde mit einem Kabel verbundenen Elektronikbauteil für die Datensammlung und Weiterleitung, 26 den Spindelhubmotor und 27 eine Verbindungsplatte mit einem Verbindungsstück zum Spindelhubmotor, welches die beiden seitlichen Gleitstangen zusammenschließt.

## Patentansprüche

1. Verfahren zur zeit- und kostensparenden hygienischen Wartung, Reinigung, Kalibrierung, Eichung und Aufbewahrung von elektroanalytischen Sensoren oder Messelektroden zur kontinuierlichen chemischen und physikalischen Analyse von Gülle von außerhalb, ohne dass eine zeitraubende und unhygienische Demontage der gesamten Messvorrichtung oder der Messlanze notwendig ist, **dadurch gekennzeichnet, dass** die Messsonde oder die Messelektrode 7 am Ende der Messlanze 1 in einem abgeschlossenen Raum 3 von der flüssigen Außenphase der Gülle durch eine Verschlussvorrichtung 8 vorübergehend getrennt wird und Reinigungs-, Eich- und Aufbewahrungsflüssigkeiten von außen 2 eingepumpt und auf diese Weise die Messsonden gewartet, gereinigt und mit Eichlösungen und Aufbewahrungsflüssigkeiten umspült werden können, sodass eine Verlängerung der Lebensdauer von Sonden erreicht wird und dass die anfallende Güllemenge kontinuierlich ermittelt werden kann.

2. Verfahren nach Anspruch 1 **dadurch gekennzeichnet, dass** als elektroanalytische Parameter die Temperatur, der pH-Wert, die Leitfähigkeit und das Reduktions/- Oxidationspotential in Gülle gemessen werden sowie die anfallende Güllemenge über eine mechanische oder elektronische Füllstandsmessung ermittelt wird.

3. Verfahren nach einem der Ansprüche 1 oder 2 **dadurch gekennzeichnet, dass** der Einsatzort der Messstelle ein Güllekeller unter einem Spaltenboden im Innenbereich eines Stalles ist.

4. Verfahren nach einem der Ansprüche 1 bis 3, **dadurch gekennzeichnet, dass** der Einsatzort der die Messstelle ein Güllekanal, eine Güllevorgrube, ein Güllehauptlager oder ein Güllelagune im Außenbereich außerhalb eines Stalles ist.

5. Verfahren nach einem der Ansprüche 1 bis 4, **dadurch gekennzeichnet, dass** für die Ausfertigung der beispielsweise angeführten Messsonden Edelstahl oder Kunststoffmaterialien verwendet werden.

6. Verfahren nach einem der Ansprüche 1 bis 5, **dadurch gekennzeichnet, dass** für die Auswertung, die Dokumentation und die Übertragung der Messsignale elektronische Geräte herangezogen werden.

7. Messlanze zum Erfassen der Zustandsdaten von Gülle, **dadurch gekennzeichnet, dass** eine Messsonde 7 in einem in Wesentlichen zylindrischen Rohr 3 aufgenommen ist, wobei die Öffnung des Rohres 3 durch eine zu öffnende Verschlussvorrichtung 8 verschlossen ist.

8. Messlanze nach Anspruch 7, **dadurch gekennzeichnet, dass** die Verschlussvorrichtung 8 aus einer Schlitzgummischeibe, einer ausdrehbaren Verschlussscheibe oder einem ausklappbaren Verschlussdeckel besteht.

9. Messlanze nach Anspruch 10, dass seitlich eine Messeinrichtung 31 zur Bestimmung des Füllstandes angebracht ist.
